# EUROPÄISCHE PATENTSCHRIFT

(11) **EP 1 609 307 B1**
(45) Veröffentlichungstag und Bekanntmachung des Hinweises auf die Patenterteilung: **09.05.2012**
(21) Anmeldenummer: 01982397.0
(22) Anmeldetag: 04.10.2001
(51) Int. Cl.: H04N 5/44

(54) **VORRICHTUNG ZUR BILDWIEDERGABE**
IMAGE REPRODUCTION DEVICE
DISPOSITIF DE REPRODUCTION D'IMAGES

(30) Priorität: 04.10.2000 DE 10050672; 08.12.2000 DE 10062503
(43) Veröffentlichungstag der Anmeldung: 28.12.2005
(73) Patentinhaber: Frank, Margit, 10829 Berlin (DE)
(72) Erfinder: Frank, Margit, 10829 Berlin (DE)
(86) Internationale Anmeldenummer: PCT/EP2001/011467
(87) Internationale Veröffentlichungsnummer: WO 2002/030110

(56) Entgegenhaltungen:
- US-A- 4 090 216
- US-A- 5 048 390
- US-A- 5 557 424

## Beschreibung

Die vorliegende Erfindung betrifft eine Vorrichtung zur Bildwiedergabe mit einer Eingangseinheit zum Empfangen von Bilddaten, die mit einer Bilddatenquelle verbunden ist, und einer Ausgangseinheit zum Ausgeben von Bilddaten, die zumindest mittelbar mit der Eingangseinheit verbunden ist und ausgebildet ist, Bilddaten an eine Bildanzeige wie einen Bildschirm auszugeben.

Solche Systeme sind weitgehend bekannt, beispielsweise werden Femsehmonitore dazu verwendet Bilder wiederzugeben. Als Bilddatenquelle dient häufig ein Videorekorder, der auf einer Videokassette abgespeicherte Bilddaten abspielt, die ein Monitor empfängt und wiedergibt. Ein solches Bildwiedergabesystem bestehend aus Videorekorder und Fernsehmonitor hat den Nachteil, dass es lediglich aufgezeichnete Bildinformationen wiedergeben kann. Das Bildwiedergabesystem ist nicht in der Lage auf äußere Einflüsse zu reagieren. Bildwiedergabesysteme, die zumindest zum Teil auf äußere Einflüsse reagieren können sind aus dem öffentlichen Nahverkehr bekannt. Monitore werden beispielsweise in U-Bahnhöfen aufgestellt, um Passanten Werbung zu präsentieren. Diese Bilder werden einfach von einer Bilddatenquelle abgespielt, auf der die Bilder gespeichert sind.

Wenn jedoch ein Zug einfährt, so wird dem Zuschauer auf den Monitoren ein Bild präsentiert, das ihn auf dieses Ereignis aufmerksam macht. Beispielsweise erscheint auf dem Monitor der Hinweis: "Achtung ein Zug fährt ein". Die Interaktivität mit der Umgebung wird dadurch erreicht, dass im Fall eines einfahrenden Zuges, der Monitor seine Informationen von einer zweiten Bilddatenquelle erhält. Diese Bilddatenquelle enthält die Bilddaten, die den auszugebenden Warnhinweis darstellen. Letztlich werden also nur vorhandene Bilddaten wiedergegeben, lediglich die Reihenfolge und der Zeitpunkt, in der diese Bilddaten wiedergegeben werden, kann durch die Umgebung beeinflusst werden, denn es wird zwischen zwei Bilddatenquellen umgeschaltet. Die Fähigkeit dieses Bildwiedergabegerätes, auf sein Umgebung zu reagieren, ist also weiterhin stark eingeschränkt.

Eine weitere allgemein übliche Anwendung interaktiver Bilderzeugung stellen Computerspiele dar. Der Spieler ist Bildern ausgesetzt, die ihm eine Situation vorspiegeln, auf die er mittels Eingabegeräten (üblicherweise Joystick, Tastatur oder Computermaus) direkt Einfluss nimmt, um so die von der Situation vorgegebenen Aufgaben zu lösen. Die Situation kann dabei verschiedensten Bereichen entnommen, der realen Welt in möglichst genauer Weise nachempfunden oder in Darstellung und Inhalt hochgradig abstrakt sein.
Aus US-A-4090 216 ist eine Vorrichtung bekannt, in der abhängig von der Helligkeit der Umgebung eine Bearbeitung von Helligkeit oder Kontrast eines Fernschbildes erfolgt.
Es ist Aufgabe der vorliegende Erfindung, eine Vorrichtung zur Bildwiedergabe mit erweiterten und veränderten Möglichkeiten bereitzustellen.

Die Aufgabe wird gelöst durch eine Vorrichtung mit den Merkmalen des Anspruchs 1. Die abhängigen Ansprüche betreffen bevorzugte Ausführungsformen.

Eine Vorrichtung zur Bildwiedergabe weist auf: Eine Eingangseinheit zum Empfangen von Bilddaten, die mit einer Bilddatenquelle verbunden ist, und eine Ausgangseinheit zum Ausgeben von Bilddaten, die zumindest mittelbar mit der Eingangseinheit verbunden ist und ausgebildet ist, Bilddaten an eine Bildanzeige wie einen Bildschirm auszugeben, eine Bearbeitungseinheit mit einem Eingang zum Empfangen mindestens eines zeitlich veränderlichen, extern von außerhalb der Vorrichtung stammenden Parameters, wobei die Bearbeitungseinheit mit der Eingangseinheit und der Ausgangseinheit verbunden ist und ausgebildet ist, von der Eingangseinheit empfangene Bilddaten in durch Masken definierten Teilbereichen in Abhängigkeit der Parameter vorzugsweise kontinuierlich zu verändern und an die Ausgangseinheit auszugeben. Mindestens einer der Parameter ist der direkten Einflussnahme durch einen Benutzer oder Betrachter entzogen.

Die Bildanzeige erhält die Bilddaten in der geeigneten Form von der Ausgangseinheit, welche wiederum mit der Bearbeitungseinheit verbunden ist. Diese empfängt den zeitlich veränderlichen Parameter über einen Eingang. Die von der Bilddatenquelle stammenden Bilddaten werden von der Bearbeitungseinheit in Teilbereichen abhängig von dem Parameter kontinuierlich verändert. Es ist somit möglich für die Vorrichtung zur Bildwiedergabe auf die Parameter derart zu reagieren, dass die wiedergegebenen Bilder in Teilbereichen verändert sind. Die Veränderung der Bilder bewirkt also nicht lediglich die Anzeige eines völlig anderen Bildes, sondern auch die Anzeige eines in Teilbereichen veränderten Bildes. Die wiedergegebenen Bilder entsprechen auch nicht mehr einem von einer Bilddatenquelle stammenden Bild, sondern sind diesem gegenüber verändert. Die nach der Bearbeitung wiedergegebenen Bilddaten sind neu und ihr Erscheinungsbild wird allein von der Abhängigkeit zwischen den eingehenden Parametern und der damit verbundenen Veränderung der Bilddaten durch die Bearbeitungseinheit bestimmt.

Die kontinuierlichen Abhängigkeiten der Bildbearbeitungseffekte von den Eingangsparametern werden über eine Ablaufsteuerung koordiniert und gegebenenfalls nach Maßgabe eines Benutzers zeitlich variiert. Die zeitliche Variation kann dabei sowohl spontan während der laufenden Bearbeitung, als auch im voraus festgelegt werden. Die Ablaufsteuerung ist dabei dergestalt ausgeprägt, dass die eingehenden Messergebnisse und Bilder in Abhängigkeit vom darstellenden Medium, dessen Bildgröße, Bildwiederholfrequenz, Farbtiefe und Kontrastumfang optimiert werden. Bei gleichen Eingangsdaten, werden also unterschiedliche Bilder erzeugt, beispielsweise, was den Detailreichtum betrifft, die dennoch die gleiche Aussage vermitteln. Dies wird im Zusammenhang mit der Verbreitung der Bilddaten über Netzwerke noch genauer dargestellt werden.

Die erfindungsgemäße Vorrichtung ist somit in der Lage, in weitaus differenzierterer Weise auf äußere Ereignisse zu reagieren, als dies aus dem Stand der Technik bekannt ist.

Zwar sind aus dem Stand der Technik Postproduktions-Systeme wie Photoshop, Flame u. a. bekannt. Diese sind dazu vorgesehen, auf einem Speichermedium gespeicherte Bilddaten mittels eines Personalcomputers gezielt zu bearbeiten. Die Effekte von eingegebenen Befehlen zur Bildbearbeitung werden auf dem Bildschirm des PCs dargestellt. Der PC empfängt also keine zeitlich veränderlichen Parameter wie Temperatur oder Helligkeit einer bestimmten Umgebung über einen Eingang, sondern Befehle über eine Tastatur oder ein anderes Eingabemittel zur gezielten und voraussagbaren Bearbeitung von Bildern. Ferner werden die von diesen Bildbearbeitungsprogrammen hervorgerufenen Bildveränderungen in der Regel als Effekte vorproduziert. Die kontinuierliche Veränderung von Bildparametern wie Farbe und Helligkeit in Abhängigkeit von einem äußeren Parameter können mittels dieser Programme nicht sichtbar gemacht werden. Stattdessen werden bei diesen Postproduktionssystemen Anfangs- und Endzustände von Bildparametern berechnet. Die Zwischenzustände werden entweder dynamisch vorproduziert, durch Effektfilter erzielt oder durch eine Mischung der Anfangs- und Endzustände ermittelt. Eine Neuberechnung im engeren Sinne erfolgt jedoch nicht. Solche Lösungen sind ausreichend, solange die Information, die die Bilddaten als Endprodukt enthalten sollen, vorhersagbar sind. Die Anforderungen ändern sich jedoch, sobald nicht vorhersagbare Ereignisse das wiedergegebene Bild beeinflussen. In diesem Fall muss die Veränderung der Bilddaten in Abhängigkeit von den Parametern kontinuierlich erfolgen. D. h., dass ein zu einem gewissen Zeitpunkt t empfangener Parameterwert P(t) eine Veränderung der zu demselben Zeitpunkt t empfangenen Bilddaten BD(t) hervorruft. Wenn die Veränderung der Bilddaten für eine begrenzte zeitliche Folge von aufeinanderfolgenden Bilddaten und Parameterwerten wie vorstehend beschrieben erfolgt, so liegt eine kontinuierliche Veränderung der Bilddaten in Abhängigkeit von dem Parameter vor. Die Manipulation der Bilddaten durch die Bearbeitungseinheit stellt somit eine prozedurale Animation der Bilddaten im Bereich der Masken dar. Die Masken können fest vorgegeben sein oder auch selbst wiederum in Abhängigkeit von den Parametern verändert werden, so dass die Masken selber eine prozedurale Animation erfahren.

Vorzugsweise repräsentieren die empfangenen Parameter Ereignisse außerhalb der Vorrichtung. Als äußeres Ereignis wird jede Form von zeitlicher Veränderung verstanden, die nicht von der Vorrichtung selbst generiert wird, sondern über den Eingang der Bearbeitungseinheit empfangen wird. Als Parameter kann jede denkbare physikalische Größe wie Helligkeit, Lautstärke oder Temperatur dienen. Ferner können die Parameter auch Ereignisse wie die Landung eines Flugzeuges, der aktuelle Wert eines Aktienindexes oder die Anzahl der Zugriffe auf eine Internet-Seite repräsentieren. Damit wird die Vorrichtung zur Bildbearbeitung in eine Beziehung zu ihrer Umwelt gesetzt. Die Veränderungen des wiedergegebenen Bildes spiegeln auf ihre Weise die Vorgänge außerhalb der Vorrichtung wieder. Für den unbefangenen Betrachter ist die Beobachtung des Bildes von hohem Unterhaltungswert, insbesondere, wenn er selbst als Teil der Umwelt der Vorrichtung die Bildveränderungen manipulieren kann und dient allgemein einer intuitiven Erfassung von Information.

In einer bevorzugten Ausführungsform ist die Bearbeitungseinheit derart ausgebildet, dass sie die Bilddaten ändert, indem sie Rechenprozesse durchführt, die die Änderung der Bilddaten durch die Parameter realisiert. Der von der Bearbeitungseinheit durchgeführte Rechenprozess basiert auf einem Algorithmus, der festlegt, wie die Parameter die Bilddaten beeinflussen. Somit ist es unmöglich, vorauszusehen, welche Veränderungen der Bilddaten auftreten werden, denn der unbekannte zeitliche Verlauf des Parameters bestimmt die Veränderung der Bilddaten. Die tatsächlich auftretenden Veränderungen sind zudem eine Funktion des zeitlich veränderlichen Parameters und damit einzigartig für jeden Wert des Parameters. Bei vorheriger Kenntnis des eingehenden Parameters sind die zeitlichen Veränderungen der Bilddaten determiniert, da jedoch die Kenntnis dieses Parameters im allgemeinen unbekannt ist, sind die veränderten Bilddaten unvorhersagbar.

Die Bearbeitungseinheit der erfindungsgemäßen Vorrichtung ist bevorzugt derart ausgestaltet, dass sie die empfangenen Bilddaten anhand der Parameter in Echtzeit verändert. Eine solche Bearbeitungseinheit ggf. mit den mit ihr unmittelbar verbundenen Bestandteilen der Vorrichtung wird im Folgenden auch als "Echtzeitsystern" bezeichnet. Unter Änderung der Bilddaten in Echtzeit wird verstanden, wenn es für einen menschlichen Beobachter unmöglich ist, eine zeitliche Verzögerung durch die Bearbeitung festzustellen. Eine solche Echtzeit-Veränderung stellt also für einen Beobachter einen zeitlich unmittelbaren Zusammenhang zwischen den empfangenen Parametern und dem wiedergegebenen Bild dar. Die Vorrichtung ist somit in der Lage, die aktuellen Ereignisse in anderer Form wiederzuspiegeln. Durch Betrachtung des wiedergegebenen Bildes lassen sich die aktuellen äußeren Ereignisse gedanklich herleiten. Das wiedergegebene Bild stellt somit einen entschlüsselbaren Code, also eine Art Sprache, dar, welche die äußeren Ereignisse repräsentiert.

Die Bearbeitungseinheit kann auch derart ausgestaltet sein, dass sie die Bildparameter der empfangenen Bilddaten wie Farbe, Helligkeit, Kontrast, Gradation oder Schärfe verändert. Auf diese Weise werden die Bildparameter in eine Beziehung zu den Parametern gesetzt, die die Umwelt der Vorrichtung repräsentieren. Das Erscheinungsbild eines veränderten Teilbereichs des wiedergegebenen Bildes stellt also eine komplexe Repräsentation unterschiedlicher Ereignisse dar. Neben solchen einzelne Bildpunkte oder Pixel unmittelbar beschreibenden Parametern kann die Bearbeitungseinheit auch ausgebildet sein, aus einer Vielzahl von Bildpunkten zusammengesetzte Bildobjekte durch Beeinflussung von deren Position im (virtuellen) Raum, deren Oberflächentextur oder dergleichen zu verändern. Die Bildobjekte können auch dreidimensional berechenbare sein.

In bevorzugten Varianten der Bearbeitungseinheit ist diese ausgebildet, entweder Bildobjekte von dem zeitlich veränderbaren (Steuer-) Parameter abhängig zeitgesteuert zu transformieren oder auch neue, nicht nur naturalistische sondern auch artifiziell erscheinende Bildobjekte in Abhängigkeit des zeitlich veränderbaren Parameters neu zu generieren und den eingehenden Bilddaten hinzuzufügen.

Weiterhin ist die Bearbeitungseinheit vorzugsweise ausgebildet, die Dynamik von Bildsequenzen oder Bildfolgen zu beeinflussen, und zwar entweder durch unmittelbares, zeitgesteuertes Beeinflussen der eingehenden Bilddaten oder durch eine von dem zeitlich veränderbaren (Steuer-) Parameter abhängige Verarbeitung vorbereiterer und gespeicherter Sequenzen.

Eine spezielle Ausführungsform der Erfindung ist dadurch gekennzeichnet, dass die Ausgangseinheit ausgebildet ist, die veränderten Bilddaten über das Internet oder Fernsehbild-Sender an Bildanzeigen auszugeben. Damit ist es möglich, die Bilddaten an eine Vielzahl von Bildanzeigen an unterschiedlichen Orten gleichzeitig auszugeben.

Vorzugsweise umfasst die erfindungsgemäße Vorrichtung eine Steuereinheit, die mit dem Sensor und der Ausgangseinheit verbunden ist und geeignet ist, den Sensor zu steuern, wobei die Steuereinheit Bilddaten von der Ausgangseinheit empfängt und den Sensor in Abhängigkeit von den von der Ausgangseinheit empfangenen Bilddaten steuert. Damit werden die ausgegebenen, veränderten Bilder mit der Bilddatenquelle rückgekoppelt.

Gemäß einer bevorzugten Ausführungsform umfasst die Vorrichtung eine mit der Bearbeitungseinheit verbundene Eingabeeinheit zum Bestimmender Rechenprozesse der Bearbeitungseinheit. Damit wird es einem "Autor" ermöglicht vorzugeben, wie die Parameter die Bilddaten verändern. Denn die von der Bearbeitungseinheit durchgeführten Rechenprozesse können über die Eingabeeinheit bestimmtwerden. Ferner kann vorgesehen sein, dass die Eingabeeinheit eine die Rechenprozesse der Bearbeitungseinheit visualisierende Benutzeroberfläche aufweist. Der Autor kann somit jederzeit überprüfen, welche Rechenprozesse von der Bearbeitungseinheit durchgeführt werden. Insbesondere im Zusammenhang mit der Verwendung von Bildmasken lässt sich durch die Eingabeeinheit die Geschwindigkeit und Intensität der Bildveränderung z.B. durch Ein- und Ausblenden der Masken vorgeben. Als Eingabeeinheit kann auch ein im folgenden erwähntes Autorensystem dienen.

Die Rechenprozesse der Bearbeitungseinheit können auch dazu dienen, die Bewegung von Flüssigkeiten, Gasen, physikalischen Teilchen oder festen Körpern zu simulieren. Die vom Sensor empfangenen Parameter erzeugen somit Veränderungen, die dem Betrachter des Bildes als die Bewegungen von realen Flüssigkeiten, Gasen oder festen Körpern erscheinen. Unter festen Körpern sind neben leblosen Gegenständen wie Kristalle auch belebte Gegenstände wie Tiere, Menschen und Pflanzen zu verstehen. Die dargestellten Bildveränderungen erzeugen die Illusion von einer realen Bewegung, beispielsweise derjenigen eines Wasserstrahls.

Zur Simulation von fließenden Stoffen wie Gase, Flüssigkeiten oder feste erodierende Stoffe wird vorzugsweise die Navier-Stokes-Gleichung verwendet. Die Navier-Stokes-Gleichung beschreibt die Bewegung von fließenden Stoffen, deren Bewegungsgeschwindigkeit deutlich unterhalb der Schallgeschwindigkeit liegt. Die im Alltag beobachteten Flüssigkeiten wie Wassertropfen werden beispielsweise durch die Navier-Stokes-Gleichung beschrieben. Unter Verwendung der Navier-Stokes-Gleichungen lassen sich auch die zuvor angesprochenen, artifiziellen Bildobjekte generieren.

Bevorzugte Ausführungsbeispiele der vorliegenden Erfindung werden nachfolgend anhand der beigefügten Figuren beschrieben.

Es zeigen:
- Fig. 1: eine Vorrichtung zur Bilddatenwiedergabe gemäß einem ersten bevorzugten Ausführungsbeispiel,
- Fig. 2: eine Bearbeitungseinheit der Vorrichtung zur Bilddatenwiedergabe gemäß dem ersten Ausführungsbeispiel,
- Fig. 3: eine Vorrichtung zur Bilddatenwiedergabe gemäß einem zweiten Ausführungsbeispiel,
- Fig. 4: eine Bearbeitungseinheit der Vorrichtung zur Bilddatenwiedergabe gemäß dem zweiten Ausführungsbeispiel, und
- Fig. 5: eine schematische Übersicht über ein alternatives Echtzeit-Bildatenverarbeitungssystem.

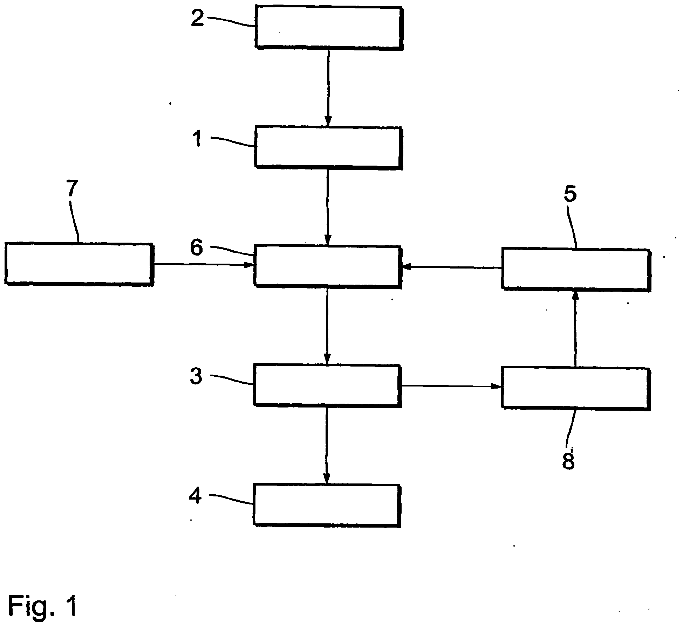

Im Folgenden wird die Vorrichtung in Fig. 1 beschrieben. Die Vorrichtung gemäß dem ersten Ausführungsbeispiel umfasst eine Bilddatenquelle 2. Als Bilddatenquelle 2 kommt jedes Speichermedium für Bilder in Betracht, wie beispielsweise Videokassetten, Photographien, DVD-Disketten und Festplatten in Betracht. Die Bilddaten werden von der Eingangseinheit 1 wiedergegeben. Als Eingangseinheit können den Bilddatenquellen entsprechende Abspielgeräte wie Videorekorder, DVD-Laufwerk oder der Lesekopf einer Festplatte verwendet werden. Die Eingangseinheit 1 überträgt die abgespielten Bilddaten an die Bearbeitungseinheit 6. Gleichzeitig empfängt die Bearbeitungseinheit 6 zeitlich veränderliche Informationen von einem Sensor 5. Als Bearbeitungseinheit 6 wird in der Regel ein elektronischer Rechner eingesetzt, der in der Lage ist, vielfältige Operationen an den empfangenen Bilddaten durchzuführen. Zunächst wählt die Bearbeitungseinheit 6 aus den empfangenen Bilddaten einen Teilbereich aus, der durch eine Maske definiert ist. Die Manipulation der Bilddaten erfolgt nur innerhalb der ausgewählten Maske. Die Lage und Größe der Maske kann vorbestimmt sein, so dass die Bearbeitungseinheit 6 lediglich die zu bearbeitenden Bilddaten anhand der Maske erkennen muss. Es kann jedoch auch vorgesehen sein, dass die Bearbeitungseinheit 6 mittels vorgegebener Maskenerkennungsverfahren eine Maske selbsttätig bestimmt. Ferner kann die Bearbeitungseinheit 6 dazu ausgebildet sein, die Masken in Abhängigkeit von den von dem Sensor 5 empfangenen Parameter zu bestimmen. Als Sensor kann jede Art von Detektor eingesetzt werden, der Größen wie beispielsweise Temperatur oder Helligkeit einer bestimmten Umgebung erfasst. Es können auch mehrere miteinander kombinierte Detektoren eingesetzt werden, so dass der Sensor 5 mehrere unterschiedliche Informationen aufnehmen und an die Bearbeitungseinheit 6 weiterleiten kann. Die unterschiedlichen Informationen erreichen die Bearbeitungseinheit 6 jeweils als zeitlich veränderliche Parameter. Die von der Eingangseinheit 1 übermittelten Bilddaten werden in der Regel von der Bearbeitungseinheit 6 nicht verändert, wenn die Bearbeitungseinheit 6 keine Informationen von dem Sensor 5 empfängt.

Die Bearbeitungseinheit 6 errechnet mittels einer vorgegebener Rechenoperation aus den empfangenen Parametern und den Bilddaten in den zu verändernden Masken neue Bilddaten. Die Abhängigkeit der Veränderung der Bilddaten von den empfangenen Parametern kann beliebig gewählt werden. Zur Festlegung der Anwendung der Rechenoperationen, die die Bearbeitungseinheit 6 durchführt, ist eine Eingabeeinheit 7 vorgesehen. Diese Eingabeeinheit 7 erlaubt einem Anwender zu bestimmen, auf welche Weise die Bearbeitungseinheit 6 die Bilddaten in Abhängigkeit von den Parametern ändert, d.h welche Rechenoperationen in welchem Maße zur Anwendung kommen. Als Eingabeeinheit 7 kann eine Tastatur oder ein elektronischer Zeichenstift vorgesehen sein.

Die Bilddaten werden schließlich von der Bearbeitungseinheit 6 an eine Ausgangseinheit 3 ausgegeben. Die Ausgangseinheit sorgt dafür, dass die Bilddaten in geeigneter Form an eine Bildanzeige 4 ausgegeben werden. Sie kann insbesondere dazu vorgesehen sein, die Bilddaten an eine Vielzahl von Bildanzeigen 4 in unterschiedlicher Form auszugeben. Findet die Übertragung an Bildanzeigen 4 über das Internet statt, so sorgt die Ausgangseinheit dafür, dass die Bilddaten als komprimierte Datenpakete von einer Internet-Seite laufend abrufbar sind. Der Abruf der Datenpakete erfolgt automatisch mittels einer geeigneten Software, die dafür sorgt, dass die Bilddaten auf dem entsprechenden Bildschirm wiedergegeben werden. Als Bildanzeige 4 kann jede Art von Monitor oder auch Projektor verwendet werden. Eine Steuereinheit 8 zur Steuerung des Sensors 5 ist vorgesehen, die ebenfalls die von der Ausgangseinheit 3 ausgegebenen Bilddaten empfängt. Durch vorgegebene Operationen wandelt die Steuereinheit 8 die empfangenen Bilddaten in Steuerbefehle zur Steuerung des Sensors 5 um. Durch diese Befehle verändert die Steuereinheit 8 beispielsweise die Lage oder Orientierung des Sensors 5. Ferner kann die Steuerung des Sensors 5 darin bestehen, dessen Empfindlichkeit zu erhöhen oder zu verringern. Die in Abhängigkeit von den Parametern des Sensors 5 veränderten Bilddaten bewirken also wiederum über die Steuereinheit 8 eine Veränderung der über den Sensor 5 empfangenen Parameter.

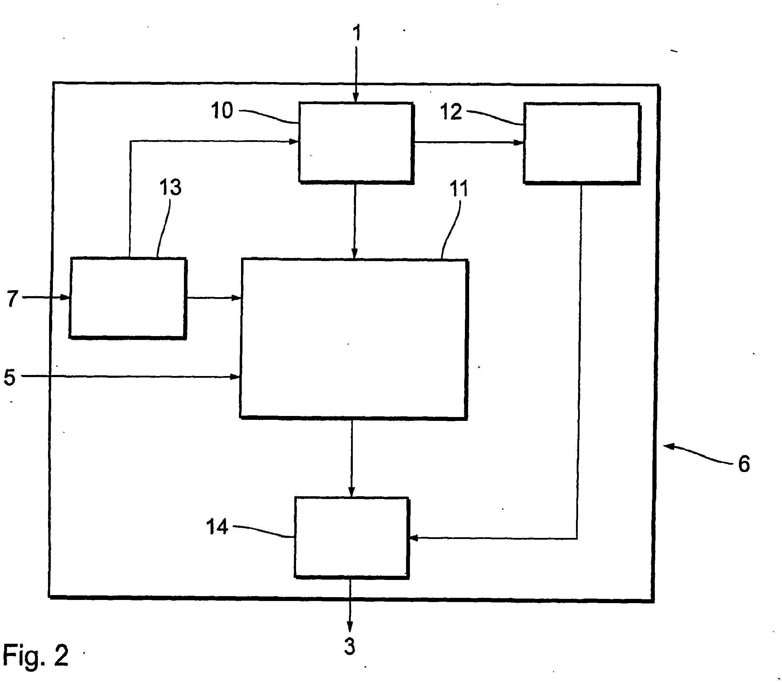

Fig. 2 zeigt ein Blockschaltbild der Bearbeitungseinheit 6 gemäß dem ersten Ausführungsbeispiel. Darin ist eine Maskenerkennungseinheit 10 vorgesehen, die dafür sorgt, dass zu bearbeitende Teilbereiche der von der Eingangseinheit 1 empfangenen Bilddaten ausgewählt werden. Dazu ist die Maskenerkennungseinheit 10 mit der Eingangseinheit 1 verbunden. Die Maskenerkennungseinheit 10 wählt anhand vorgegebener Maskenerkennungsverfahren die zu bearbeitenden Bilddaten aus und übermittelt sie an eine Maskenbearbeitungseinheit 11. Die übrigen Bilddaten werden von der Maskenerkennungseinheit 10 in einem Bilddatenspeicher 12 zwischengespeichert. Die Maskenbearbeitungseinheit 11 erhält neben den zu bearbeitenden Bilddaten zeitlich veränderliche Parameter von dem Sensor 5, und sie errechnet neue Bilddaten in Abhängigkeit von den empfangenen Bilddaten und den empfangenen Parametern.

Empfängt die Maskenbearbeitungseinheit 11 keine Parameterinformationen von dem Sensor 5, so gibt sie die von der Maskenerkennungseinheit 10 erhaltenen Bilddaten unverändert an eine Mischungseinheit 14 aus. Diese ist mit der Maskenbearbeitungseinheit 11 und dem Bilddatenspeicher 12 verbunden und setzt die von der Maskenbearbeitungseinheit 11 unverändert übertragenen Bilddaten mit den im Bilddatenspeicher 12 gespeicherten Bilddaten wieder zusammen. Die zusammengesetzten Bilddaten entsprechen in diesem Fall den ursprünglich von der Eingangseinheit 1 übertragenen Bilddaten und werden dann von der Mischungseinheit 14 an die Ausgangseinheit 3 übertragen.

Empfängt die Maskenbearbeitungseinheit 11 hingegen zeitlich veränderliche Parameter von dem Sensor 5, so errechnet sie neue Bilddaten für den Maskenbereich. Der Algorithmus zur Berechnung der neuen Bilddaten ist in einem Operationsspeicher 13 abgespeichert. Die Maskenbearbeitungseinheit 11 greift auf den Operationsspeicher 13 zu, um das in diesem abgespeicherte Berechnungsverfahren zur Berechnung neuer Bilddaten durchzuführen. Der Operationsspeicher 13 ist wiederum mit der Eingabeeinheit 7 verbunden, die dazu vorgesehen ist, die Operationen der Maskenbearbeitungseinheit 11 zu bestimmen, indem die durchzuführenden Operationen über die Eingabeeinheit 7 in dem Operationsspeicher 13 abgespeichert werden. Die Maskenbearbeitungseinheit 11 überträgt die neu berechneten Bilddaten an die Mischungseinheit 14. Diese setzt die neu berechneten Bilddaten mit den im Bilddatenspeicher 12 gespeicherten Bilddaten zusammen, so dass ein Bilddatensatz entsteht, der sich im Bereich der Maske von den über die Eingangseinheit 1 eingegebenen Bilddaten unterscheidet. Dieser Bilddatensatz wird wiederum von der Mischungseinheit 14 an die Ausgangseinheit 3 ausgegeben. Schließlich ist der Operationsspeicher 13 auch dazu vorgesehen, die von der Maskenerkennungseinheit 10durchzuführenden Maskenerkennungsoperationen abzuspeichern. Diese Operationen können ebenfalls über die Eingabeeinheit 7 in den Operationsspeicher 13 eingeschrieben werden. Die Maskenerkennungseinheit 10 ist mit dem Operationsspeicher 13 verbunden und führt die in diesem gespeicherten Maskenerkennungsoperationen aus.

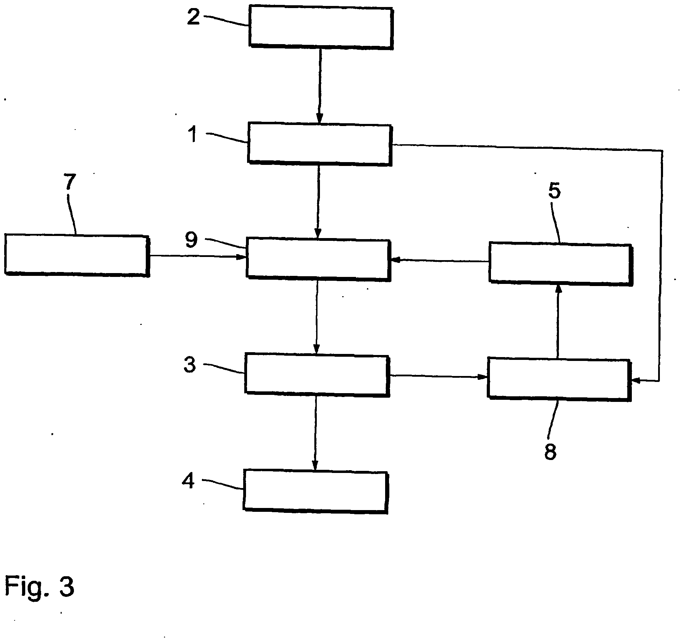

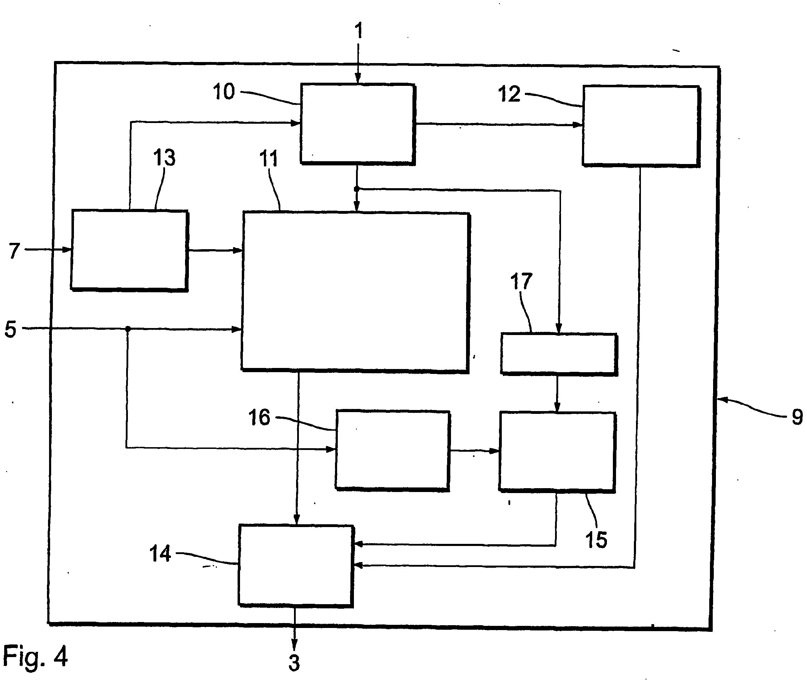

Fig. 3 zeigt das zweite Ausführungsbeispiel der vorliegenden Erfindung. In dieser Figur sind die dem ersten Ausführungsbeispiel entsprechenden Merkmale mit denselben Bezugszeichen bezeichnet. Anstelle der Bearbeitungseinheit 6 ist eine Bearbeitungseinheit 9 dargestellt, die erweiterte Möglichkeiten hat. Diese Bearbeitungseinheit ist im Detail in Fig. 4 dargestellt. Die Bearbeitungseinheit 9 bewirkt jedoch nach wie vor eine Veränderung der eingehenden Bilddaten in Abhängigkeit von den Parametern. Ein Unterschied zu der in Fig. 1 beschriebenen Vorrichtung besteht darin, dass die Steuereinheit 8 einen zweiten Eingang besitzt, über den sie die unveränderten Bilddaten von der Eingangseinheit 1 empfängt. Die Steuereinheit 8 ist zudem dazu ausgelegt, den Sensor 5 sowohl in Abhängigkeit von den veränderten Bilddaten von der Ausgangseinheit 3 als auch in Abhängigkeit von den unveränderten Bilddaten von der Eingangseinheit 1 zu steuern. Insbesondere kann die Steuereinheit 8 derart ausgelegt sein, dass sie eine Differenz zwischen den unveränderten Bilddaten und den veränderten Bilddaten erhebt und in Abhängigkeit von der Differenz den Sensor steuert. Diese Differenz entspricht der Änderung der Bilddaten im Bereich der Masken. Die Steuerung des Sensors ist somit eine Funktion der Änderung der Bilddaten.

Fig. 4 zeigt die Bearbeitungseinheit 9 des zweiten Ausführungsbeispiels im Detail. Die gleichen Bestandteile der Bearbeitungseinheit wie in Fig. 6 sind mit denselben Bezugszeichen gekennzeichnet. Neben einer ersten Maskenbearbeitungseinheit 11, die der Maskenbearbeitungseinheit aus Fig. 2 entspricht, ist eine zweite Maskenbearbeitungseinheit 15 vorgesehen. Diese ist mit einem Maskenspeicher 17 und einem Parameterspeicher 16 verbunden, in dem die von dem Sensor stammenden Parameter abgespeichert werden. Die zweite Maskenbearbeitungseinheit 15 greift auf diese Speicher zu, um die Bilddaten im Bereich der Maske zu verändern. Die Veränderung der Bilddaten erfolgt dabei nach dem Prinzip der Überlagerung sogenannter Bildlayer. Für die Überlagerung geeignete Bilddaten sind in dem Maskenspeicher 17 abgelegt. In Abhängigkeit von dem im Parameterspeicher 16 abgelegten Werte des vom Sensor stammenden Parameters werden durch die zweite Maskenbearbeitungseinheit 15 in dem Maskenspeicher 17 gespeicherte Bilddaten für die jeweils wie vorgegeben zu verändernde Bildmaske abgerufen und gegebenenfalls in Abhängigkeit des Parameters bearbeitet. Die auf diese Weise gewonnenen Bilddaten stehen am Ausgang der Maskenbearbeitungseinheit 15 zur Verfügung und können in der Mischungseinheit 14 mit den in Echtzeit von der ersten Maskenerkennungseinheit 11 ausgegebenen Bilddaten gemischt werden. Auf diese Weise ist es möglich, in Abhängigkeit des vom Sensor stammenden Parameters Überblendeffekte zwischen den in dem Maskenspeicher 17 gespeicherten Bilddaten und den von der ersten Maskenerkennungseinheit 10 stammenden Bilddaten innerhalb durch die jeweiligen Masken definierter Bildausschnitte zu erzielen. Der Grad der Überblendung wird bereits durch die zweite Maskenbearbeitungseinheit 15 festgelegt, in der die aus dem Maskenspeicher 17 stammenden Bilddaten in Abhängigkeit des im Parameterspeicher 16 gespeicherten Parameters verstärkt oder abgeschwächt werden. Die von der Eingangseinheit 1 stammenden Bilddaten werden bereits in der ersten Maskenbearbeitungseinheit 11 in Abhängigkeit von dem vom Sensor stammenden Parameter verstärkt oder abgeschwächt, so dass sich durch Überlagerung der auf diese Weise bearbeiteten Bilddaten für bestimmte Masken die bereits erwähnten Überblendeffekte ergeben. Die Veränderung von Bilddaten auf die zuletzt beschriebene Weise durch Überlagerung mit zuvor in dem Maskenspeicher 17 abgelegten Bilddaten ist mit einem geringeren Rechenaufwand verbunden, als die vollständig neue Berechnung von Bilddaten für bestimmte Masken, so dass die Ausführungsform nach Figur 4 geeignet ist, die Echtzeitbildmanipulation in Abhängigkeit des Parameters auch mit geringerem Rechenaufwand zu verwirklichen. Zusätzlich kann die Eingabeeinheit 7 direkt mit dem Layerspeicher 17 und der Maskenbearbeitungseinheit 15 verbunden sein, um beispielsweise die Maskenbearbeitung vom Eingangsbildsignal abhängig zu machen.

Im folgenden sollen nun Aspekte der technischen Realisierung näher erläutert werden:
Die Berechnung der Bildströme in Echtzeit ist aufwändig, wobei der Rechenaufwand natürlich von der verwendeten Bildgröße und -wiederholfrequenz abhängt.
Daher wird bei hohen Auflösungen ein zentraler Server mit großer Rechenleistung die Bilder berechnen. Bei niedrigerer Auflösung ist auch eine lokale Berechnung mit preiswerteren Systemen denkbar.

Besonders interessant sind verteilte Systeme, die einen Anteil der Logik in jedem einzelnen Display enthalten, während der Großteil auf einem Server konzentriert ist. Dies wird noch gesondert beschrieben werden.

Grundsätzlich existieren verschiedene Architekturen mit jeweiligen Vor-und Nachteilen, um die Bilder oder Teile davon zu berechnen:
1) Hochleistungsgrafikrechner:
   Solche Rechner - zur Zeit insbesondere die von sgi - enthalten spezielle Hardwarebeschleuniger, die die benötigten Rechenoperationen übernehmen. Über einen genormte Schnittstelle (OpenGL) wird die Grafikhardware programmiert. Diese Lösung bietet große Flexibilität, auch was die eventuelle zusätzliche Darstellung dreidimensionaler Bildinhalte betrifft.
2) Cluster von "normalen" PCs:
   Der Vorteil dieser Lösung liegt in der nahezu beliebigen Erweiterbarkeit durch Hinzufügen weiterer Rechner. Es existieren auch für diese Systeme Grafikbeschleuniger und mit derselben Programmierschnittstelle (OpenGL), wie bei den Hochleistungsgrafikrechnern, was eine eventuelle Übertragung vereinfacht und auch die Möglichkeit hybrider Systeme eröffnet.
3) Bildeffektkarten und Videohardware, wie sie für den digitalen Videoschnitt verwendet werden:
   Der Vorteil liegt in einem moderaten Preis bei hoher Leistung auf speziellen Gebieten. Der Nachteil ist die Begrenzung auf sehr bestimmte Auflösungen und relativ geringe Flexibilität, da die Effekte sehr genau auf die Karten abgestimmt sein müssen. Komponenten einer Serienproduktion in höheren Stückzahlen können allerdings durchaus diesem Bereich entnommen sein.
4) Signalprozessorsysteme (insbesondere DSP, digitale Signalprozessoren):
   Diese bieten extrem hohe Rechenleistung bei allerdings begrenztem Datenein- und -ausgang, was sich jedoch in näherer Zukunft aller Voraussicht nach ändern wird.

### Vorzugsweise ist die Berabeitungseinheit an OpenGLangepasst.

OpenGL ist eine genormte Schnittstelle, die es erlaubt eine Vielzahl von Grafikoperationen zu programmieren. Die Operationen werden je nach Systemausstattung entweder in Software auf dem Zentralprozessor oder aber auf der Grafikkarte ausgeführt. OpenGL ist genormt und existiert für eine Vielzahl vom unterschiedlichen Systemen, sodass Programme mit relativ geringem Aufwand übertragbar sind, wenn der Standard eingehalten wird. OpenGL ist zudem ein Quasi-Standard für die dreidimensionale Bildbearbeitung, dessen Potential im zweidimensionalen Bereich allerdings kaum ausgeschöpft wird.

OpenGL bietet grundsätzlich zunächst einmal Befehle, um dreidimensionale Körper darzustellen. Allerdings können Bilder - sogenannte Texturen - auf diese Körper gelegt und auf vielfältige Weise manipuliert werden. Dadurch bieten sich mächtige Werkzeuge für die Veränderung zweidimensionaler Bilder:
- Veränderung der Geometrie der Körper oder der Texturkoordinaten für Verzerrungen der Videobilder
- Lagen (layer) mehrerer teilweise transparenter Körper übereinander für Blendeneffekte
- Lookup Tables und Farbkorrekturmatrizen während der Texturdarstellung für Farbeffekte
- Beleuchtung: gleichmäßig, gerichtet, punktförmig und vieles mehr
- Multiple Texturen auf einem Körper
- Unschärfen und andere matritzenbasierte Effekte wie Eckenerkennung während der Texturdarstellung
- Entfernungsabhängige Nebeleffekte zur Farbkorrektur
- Partikelsysteme aus kleineren texturierten Objekten oder verzerrte Texturen zur Darstellung von Wirbeln oder anderen physikalischen Phänomenen.

Wird all dieses in Hardware ausgeführt (Architektur 1), so ist, je nach Ausstattung allerdings verschieden, eine Begrenzung der gleichzeitig ausführbaren Effekte gegeben. Das heißt, die Effekte müssen auf die sogenannte Grafikpipeline dergestalt abgebildet werden, dass ein Echtzeitverhalten möglich ist. Eine zusätzliche Einheit ist vorgesehen, um diese Abhängigkeiten im Vorfeld zu planen und Effekte auf die entsprechende Hardware abzubilden.

Sowohl für 1) als auch für 2) gilt, dass bei steigender Komplexität der Effekte auch mehreren Systeme entweder parallel oder hintereinander geschaltet werden können, was Nachteile bezüglich Komplexität und Wartbarkeit mit sich bringt.

Eine wichtige Rolle in der Verwirklichung der hier dargestellten Konzepte spielt die Übertragung über Netzwerke. Ein Netzwerk kann neben unmittelbaren, drahtgebundenen Verbindungen auch Funk- oder Satellitenverbindungen oder Ähnliches enthalten.

Aus kosten- und wartungstechnischen Gründen ist es vorzugsweise vorgesehen, die Rechnersysteme, die für die Bilderzeugung nötig sind, zentral aufzustellen: Die Hardware, die benutzt wird, um die Daten in Echtzeit zu generieren ist aufwändig und erfordert ein hohes Maß an technischer Infrastruktur sowie Ausfallsicherheit aller Komponenten; dazu wird eine gewisse Platzausstattung benötigt. Die verschiedenen Displays sollen jedoch möglichst mobil und anspruchslos sein, um sehr flexibel überall einsetzbar zu sein.

Ein Rechnersystem kann durchaus eine beliebige Anzahl von Displays mit Inhalten bespielen, was die Kosten pro bespieltem Display beträchtlich senkt. Um dabei dennoch ein hohes Maß an Integration des Betrachters in das projizierte Geschehen zu gewährleisten, ist eine lokale Recheneinheit im Display vorgesehen, die mit vergleichsweise geringem rechnerischem wie finanziellem Aufwand eine lokale Anpassung der globalen Bildströme vornimmt. Dieses Verfahren wird im weiteren noch ausführlicher beschrieben werden.

Eine Komprimierung in Echtzeit kann die Übertragungsraten und Kosten signifikant senken, stellt jedoch hohe Anforderungen.

Die Übertragung über schmalbandige Netzwerke, wobei besonders dem Internet eine wichtige Rolle zukommt, stellt weitere Anforderungen. Zwar gibt es Techniken, multimediale Inhalte, dabei insbesondere bewegte Bilder und Ton, auch im Internet komprimiert zu übertragen, dennoch sind die Datenraten zu niedrig, um hohe Bildauflösungen zu erreichen.

Es müssen also Bilder in kleineren Auflösungen zu sehen sein, was eine grundlegende Anpassung der Bildbearbeitungseffekte durch die Ablaufsteuerung erfordert. Die gleichen Eingangsparameter und -Bildsequenzen führen bei variabler Bildauflösung zu ähnlichen und aussagegleichen aber - beispielsweise den Detailreichtum, die Farbtiefe oder die Veränderungsgeschwindigkeit betreffend - dennoch unterschiedlichen Ausgangsbildern.

Es ist weiterhin vorgesehen, dass ein gut ausgestatteter und entsprechend teurer Server eine Reihe von Terminals bespielt, um die Kosten pro Terminal zu senken. Das wirkt sich jedoch nachteilig auf die Integration des Betrachters in das dargestellte Geschehen aus, was den Reiz des beschriebenen Systems ausmacht.

Dieser Nachteil kann jedoch vermieden werden: Jedes Terminal erhält eine vergleichsweise einfache und billige eigene Bildbearbeitungseinheit, um das vom Server kommende, aufwändig gestaltete Material mit interaktiven und lokalen Aspekten anzureichern. Dazu wird beispielsweise im Serverbildstrom wenigstens eine Ebene definiert, die nach Maßgabe der Bildkomposition durch das Display verändert wird. Es werden also lediglich explizit dafür freigegebene Bereiche in der lokalen Bildbearbeitungseinheit aufbereitet, um lokal erfasste Daten zu integrieren.

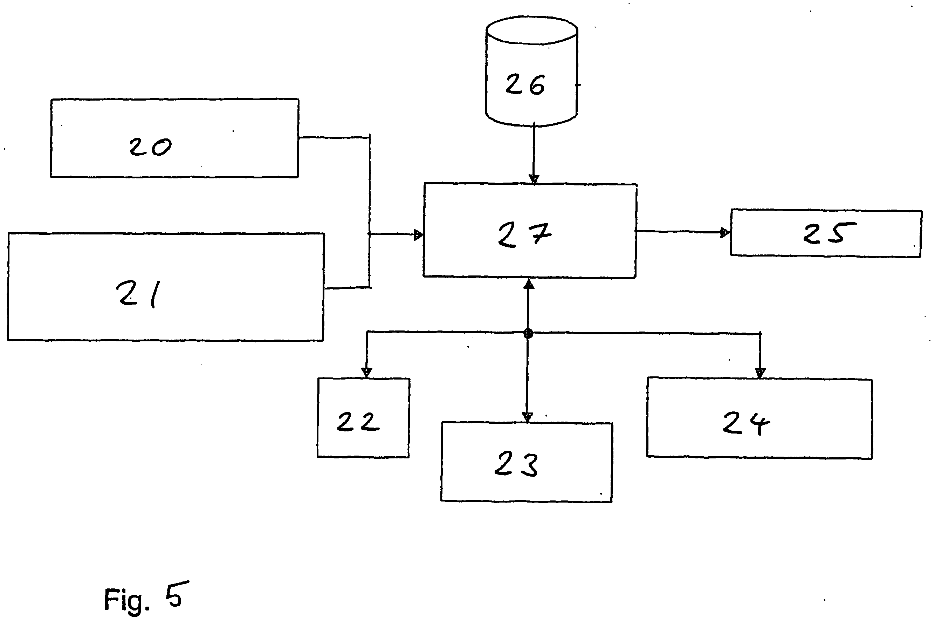

Schließlich soll ein spezifisches, alternatives System zur prozeduralen Echtzeitmanipulation von Bilddaten und Varianten desselben mit Bezug auf Figur 5 erläutert werden.

Für das System zur prozeduralen Echtzeitmanipulation sind grundsätzlich zwei Komponenten zu unterscheiden, das Autorensystem und das Echtzeitsystem.

Das Autorensystem (Eingabeeinheit) besteht aus einem Konfigurationsmodul und einem Bearbeitungsmodul. Mit Hilfe des Konfigurationsmoduls wird die Hardware des Systems spezifiziert. Dazu gehört die Anzahl der Bildschirme, die Spezifikation der Eingabedaten (Messstationen, Musik, Interaktionskomponenten), etc. Mit dem interaktiven Bearbeitungsmodul werden dem eigentlichen Videodatenstrom auf Framebasis Prozeduren (CFD, Bildverarbeitung) und Masken zugeordnet, die ihrerseits mit den Eingabedaten verknüpft werden. Auf diese Weise kann das Videobild gestalterisch bearbeitet werden. Darüber hinaus müssen sich die spezifizierten Sequenzen bereits im Bearbeitungsmodul simulieren lassen. Sowohl die im Konfigurationsmodul als auch die im Bearbeitungsmodul erzeugten Daten werden in einem eigens dafür zu entwerfenden Datenformat abgespeichert. Dadurch lassen sich beliebige Skripte und Konfigurationen erzeugen und jederzeit wiederverwenden.

Im Echtzeitsystem (Bearbeitungseinheit) erfolgt die Komposition eines neuen Videodatenstroms aus einem oder mehreren Videoeingangsströmen, CFD, und prozedural gesteuerter Bildmanipulation. Dazu liest das Echtzeitsystem neben den Videoeingangsdaten die Konfigurations- und die Bearbeitungsdatei.

Im Gegensatz zum Echtzeitsystem spielen zeitliche Randbedingungen im Autorensystem eine untergeordnete Rolle. Interaktive Antwortzeiten sind vollkommen ausreichend. Wichtig beim Autorensystem ist jedoch die Benutzerschnittstelle, auf die beim Echtzeitsystem je nach Anwendung sogar vollständig verzichtet werden kann. Interessant ist eine Benutzerschnittstelle für das Echtzeitsystem nur dann, wenn das System direkt auf die Benutzer reagiern soll. Dies ist z.B. der Fall, wenn eines der Ausgabegeräte einen Touch-Screen enthält, mit der der Benutzer die Bilder steuern kann, oder wenn das Video auf Spracheingabe reagieren soll.

Das Echtzeitsystem setzt sich im Ausführungsbeispiel aus folgenden Komponenten zusammen:
Video/Bildeingangsmodul 20, Eingabemodul 21, insbesondere Messwerterfassungsmodul, CFD-Simulator 22 (CFD: Computational Fluid Dynamics), Volumenvisualsierungseinheit 23, Bildverarbeitungseinheit 24 (OpenGL basiert), Ausgabeeinheit 25, Bilddatenspeicher 26 und zentrales Kompositionsmodul 27.

Im Kompositionsmodul laufen die Eingabedatenströme zusammen. Anhand der Spezifikation in der Bearbeitungsdatei baut der Kompositionsmodul eine 3D Szene mit Videotexturen auf und generiert und animiert z.B. mit Hilfe des Stencil-Buffers Masken auf den Frames des Eingangsvideos. Zur prozeduralen Animation von Bildinhalten kommuniziert der Kompositionsmodul mit dem Eingabemodul, dem CFD-Modul, dem Volumenvisualisierer und der Bildverarbeitungseinheit. Mit Hilfe der Manipulationsmodule wird die 3D- Szenenbeschreibung entsprechend modifiziert und schließlich gerendert und das Bild an die Bildausgabeeinheit weitergeleitet. Die Bildausgabeeinheit kann dabei wegfallen, wenn z.B. die Bilddaten direkt aus dem Framebufferüber eine VGA-Schnittstelle an ein entsprechendes Ausgabegerät weitergereicht werden. Ansonsten sind je nach Bedarf entsprechende Komprimierungsalgorithmen und Archivierungsmethoden zu realisieren. Die Eingabeeinheit kapselt sinnvollerweise die unterschiedlichen Eingabedatenströme (skalare Werte) durch ein normiertes Interface.

Als technische Grundlage wird ein Graphikrechner eingesetzt, der Videotexturen unterstützt. Zusätzlich muss die Hardware über einen hinreichend schnellen Bus und über einen hinreichend schnellen Plattenzugriff zur Speicherung des Ausgangsvideostroms verfügen.

Neben Hardwareunterstützung spielen bei der Auswahl eines Systems auch die Softwareschnittstellen eine bedeutende Rolle. Hier bieten verschiedene Hersteller neben der Hardwareunterstützung auch den entsprechenden Softwaresupport in Form einer Erweiterung des Standard OpenGL-Befehlsatzes um Befehle zur Videotexturierung und Bildverarbeitung in Hardware. Diese Möglichkeiten (auch in Form von Erweiterungskarten) existieren auf praktisch allen Plattformen. Die wichtigsten Unterschiede gibt es hier bzgl. der Auflösung und der Anzahl der Videoströme die in Echtzeit verarbeitet werden können.

Wünschenswerte Hardwareeigenschaften sind: Unterstützung von DVE (Digital Video Editing), viele Bildverarbeitungsoperationen in Hardware, wie z.B. Texturefilterung, Faltung, Histogrammerstellung, Farb-Matrix und lineare Farbraumkonversion, Lookup Tabellen mit bis zu 4096 Farbeinträgen, atmosphärische Effekte, wie z.B. Nebel.

Wichtig ist ist auch die Berücksichtigung der Datenraten. Da die vorproduzierten Sequenzen vorzugsweise 10-12 Minuten lang sind, können diese nicht im RAM gehalten werden, sondern müssen zum Verarbeiten von externen Medien geladen werden.

Bei Verwendung von 1024 x 1280 Punkten Auflösung für die Videobilder ergibt sich für eine Farbtiefe von 8x8x8 Bit , d.h. 16 Mio. Farben und 25 Bildern pro Sekunde ein unkomprimierter Datenstrom von 93,75 MByte/sec. Verglichen mit 29,66 Mbyte/sec für unkomprimiertes PAL ist dies mehr als ein Faktor 3. Verwendet man die durchaus übliche 4:2:2 Kodierung für die Farben, so kommt man bei PAL auf 19,78 Mbyte/sec und bei einer Auflösung von 1024 x 1280 auf beachtliche 62,5 Mbyte/sec. Ohne weitere Komprimierung lässt sich dieser Datenstrom daher nicht von Platte einlesen, wenn man von einer max. Transferrate von 40 Mbyte/sec für einen ULTRA SCSI Adapter ausgeht. D.h. zusätzlich zu allen möglichen Berechnungen muss der Videostrom in Echtzeit dekomprimiert werden. Sollen mehrere Layer gemischt werden, dann müssen zum Zeitpunkt des Mischens die Layer als unkomprimierte Videoströme vorliegen. Wegen der hohen notwendigen Bandbreite kommen hier vorzugsweise schnelle Speicherzugriffe einer SharedMemory Architektur in Frage. Eine Hardware-Bandbreite von 80OMB/sac Peak Performance reicht grundsätzlich aus, z.B. 5 Video-DatenStröme aus dem Speicher zu laden, in einem Prozessor zu vereinigen (wenn nur elementarste Operationen durchgeführt werden) und als einen Datenstrom wieder in den Speicher zu schreiben.

Mit realistischem Aufwand zu implementieren sind diese Operationen z.B., wenn auf POSIX-Threads zurückgegriffen werden kann und die dort vorhandenen Synchronisationsprimitiva. POSIX-Threads werden von dem IRIX Betriebssystem der Firma Silicon Graphics Inc. (SGI) unterstützt. Da die notwendigen Datentransferraten bei 5 Layers und 1024 x 1280 Auflösung sehr hoch sind, muss bei der Implementierung von Software gleich jeder Art sehr viel Sorgfalt aufgewandt werden, da die Synchronisationseffekte eines jeden Befehls bedacht werden müssen.

Das Laden eines (Videodaten-)Stromes kann in der Regel wesentlich effizienter durchgeführt werden wie das mehrerer Ströme, weil beispielweise Repositionierungen des Festplattenkopfes seltener vorkommen usw. Auch andere Vorgänge, wie etwa Lesen der Daten auf sogenannten "Slave"-Rechnern und Transfer an den "Master"-Rechner etwa via Fast-Ethemet bleiben in einer ähnlichen Bandbreite. Um die Bandbreite für die Übertragung von Videoströmen zu beschränken, ist eine Komprimierung der Videodaten sinnvoll und je nach Hardware erforderlich.

## Patentansprüche

1. Vorrichtung zur prozeduralen Echtzeitmanipulation von Bilddatenströmen mit einer Eingangseinheit (1) zum Empfangen von Bilddaten strömen, die mit einer Bilddatenquelle (2) verbunden ist, und einer Ausgangseinheit (3) zum Ausgeben von Bilddaten, die zumindest mittelbar mit der Eingangseinheit (1) verbunden ist und ausgebildet ist, Bilddaten an mindestens eine Bildanzeige (4) auszugeben, aufweisend eine Bearbeitungseinheit (6; 9) mit einem Eingang zum Empfangen mindestens eines zeitlich veränderlichen, externen, von von außerhalb der Vorrichtung stammenden Umgebungsgrößen abgeleiteten Parameters wie beispielsweise der Umgebungstemperatur, wobei die Bearbeitungseinheit (6; 9) mit der Eingangseinheit (1) und der Ausgangseinheit (3) verbunden und ausgebildet ist, von der Eingangseinheit (1) empfangene Bilddaten in Abhängigkeit von den Parametern in den Bildparametern zu verändern und an die Ausgangseinheit (3) auszugeben, wobei die Bearbeitungseinheit (6; 9) derart ausgebildet ist, dass sie die empfangenen Bilddaten ändert, indem sie Rechenprozesse durchführt, die die Änderung der Bilddaten durch die Parameter bestimmen, wobei die Vorrichtung eine mit der Bearbeitungseinheit verbundene Eingabeeinheit (7) zum Bestimmen der Rechenprozesse der Bearbeitungseinheit umfasst, und wobei die Bearbeitungseinheit (6) eine Maskenerkennungseinheit (10) umfasst, die dafür sorgt, dass zu bearbeitende Teilbereiche der von der Eingangseinheit (1) empfangenen Bilddaten ausgewählt werden und wobei die Maskenerkennungseinheit (10) mit der Eingangseinheit (1) verbunden ist und anhand vorgegebener Maskenerkennungsverfahren die zu bearbeitenden Bilddaten aus dem eingehenden Bilddatenstrom auswählt und sie an eine Maskenbearbeitungseinheit (11) übermittelt und wobei die Maskenbearbeitungseinheit (11) neben den zu bearbeitenden Bilddaten zeitlich veränderliche Parameter erhält und neue Bilddaten in Abhängigkeit von den empfangenen Bilddaten und den empfangenen Parametern errechnet, und wobei die Bearbeitungseinheit (6,9) dazu ausgebildet ist, die Masken in Abhängigkeit von den Parametern zu verändern, so dass die Masken selbst eine prozedurale Animation erfahren.

2. Vorrichtung nach Anspruch 1, **dadurch gekennzeichnet, dass** die Bearbeitungseinheit (6;9) ausgebildet ist, die von der Eingangseinheit (1) empfangenen Bilddaten in Abhängigkeit von den Parametern derart kontinuierlich zu verändern, dass auch eine sprunghafte Änderung eines Parameters eine allmähliche Veränderung der Bilddaten bewirkt, und an die Ausgangseinheit (3) auszugeben.

3. Vorrichtung nach Anspruch 2, **dadurch gekennzeichnet, dass** die Bearbeitungseinheit (6;9) ausgebildet ist, die von der Eingangseinheit (1) empfangenen Bilddaten durch Transformation von vorgegebenen Bildinformatonen ausgehend kontinuienich zu verändern.

4. Vorrichtung nach Anspruch 1, **dadurch gekennzeichnet dass** die Bearbeitungseinheit (6;9) ausgebildet ist, die von der Eingangseinheit (1) empfangenen Bilddaten durch Generieren neuer, artifizieller Bildinformationen zu verändern.

5. Vorrichtung nach Anspruch 1, **dadurch gekennzeichnet, dass** die Bearbeitungseinheit (6;9) ausgebildet ist, die empfangenen Bilddaten pixelweise zu verändern.

6. Vorrichtung nach Anspruch 1, **dadurch gekennzeichnet, dass** die Parameter außerhalb der Vorrichtung stattfindende Ereignisse repräsentieren.

7. Vorrichtung nach einem der vorstehenden Ansprüche, **dadurch gekennzeichnet, dass** die Bearbeitungseinheit (6; 9) derart ausgestaltet ist, dass sie die empfangenen Bilddaten in Echtzeit verändert.

8. Vorrichtung nach einem der vorstehenden Ansprüche, **dadurch gekennzeichnet, dass** die Bearbeitungseinheit (6; 9) derart ausgestaltet ist, dass sie Bildparameter der empfangenen Bilddaten wie Farbe, Helligkeit, Kontrast, Gradation, Schärfe verändert.

9. Vorrichtung nach einem der vorstehenden Ansprüche, **dadurch gekennzeichnet, dass** die Bearbeitungseinheit (6; 9) derart ausgestaltet ist, dass sie die Ablaufgeschwindlgkeit von Bildsequenzen, die Geschwindigkeit von Bildtransformationen, Formverläufe, Positionierung und Ausdehnung von dreidimensionalen Körpern, Texturen von Bildobjekten, durch Stitisierungen vorgegebene Kombinationen von die Erscheinung von Bildobjekten bestimmenden Parametern, eine Tiefendarstellung, oder Bildobjekte in Form geometrischer Effekte verändert.

10. Vorrichtung nach einem der vorstehenden Ansprüche, insbesondere nach Anspruch 3, **dadurch gekennzeichnet dass** die Bearbeitungseinheit (6;9) ausgebildet ist, die empfangenen Bilddaten durch Überlagerung mit zuvor gespeicherten Bilddaten innerhalb durch Masken definierter Bildbereiche zu verändern.

11. Vorrichtung nach einem der vorstehenden Ansprüche, **dadurch gekennzeichnet, dass** die Ausgangseinheit (3) ausgebildet ist, die veränderten Bilddaten über ein Netzwerk wie das internet, Femsehbild-Sender oder Computemetzwerke an die Bildanzeigen (4) auszugeben.

12. Vorrichtung nach einem der vorstehenden Ansprüche, **gekennzeichnet durch** einen mit dem Eingang der Bearbeitungeenheit (6; 9) verbundenen Detektor (5) zum Messen der bildbeeinflussenden zeitlich veranderilchen Parameter.

13. Vorrichtung nach Anspruch 12, **dadurch gekennzeichnet, dass** Detektor (5) in seinem Zustand nicht durch einen Betrachter der an die Ausgangseinheit (3) ausgegebenen Bilddaten beeinflussbar ausgebildet ist

14. Vorrichtung nach Anspruch 12 oder 13, **gekennzeichnet durch** eine Steuer-einheit (8), die mit dem Detektor (5) und der Aus angseinheit (3) verbunden ist und geeignet ist, den Detektor (5) zu steuern, wobei die Steuereinheit (8) Bilddaten von der Ausgangseinheit (3) empfängt und den Detektor (5) in Abhängigkeit von den von der Ausgangseinheit (3) empfangenen Bilddaten steuert.

15. Vorrichtung nach Anspruch 1, **dadurch gekennzeichnet dass** die Eingabeeinheit (7) ausgebildet ist, die Rechenprozesse anhand eines algorithmischen Regehwrkes zu bestimmen.

16. Vorrichtung nach Anspruch 1, **dadurch gekennzeichnet, dass** die Eingabeeinheit (7) eine die Rechenprozesse der Bearbeitungseinheit (6; 9) visualisierende Benutzeroberfläche aufweist.

17. Vorrichtung nach Anspruch 1, **dadurch gekennzeichnet** das die Bearbeitungsenheit (6,9) ausgebildet ist, durch die Rechenprozesse die Bewegung von Flüssigkeiten, Gasen, Partikeln, physikalischen Teilchen oder festen Körpern zu simulieren.

18. Vorrichtung nach Anspruch 17, **dadurch gekennzeichnet, dass** die Bearbeitungseinheit (6; 9) ausgebildet ist, die Bewegung fließender Stoffe mittels der Navier-Stokes-Gleichung zu simulieren.

## Claims

1. Device for the procedural real-time manipulation of image data streams comprising an input unit (1) for receiving image data streams, which is connected to an image data source (2), and an output unit (3) for outputting image data, which is connected to the input unit (1) at least indirectly and is designed to output image data to at least one image display (4), comprising a processing unit (6; 9) having an input for receiving at least one temporally variable, external parameter derived from ambient variables originating from outside the device, such as the ambient temperature, for example, wherein the processing unit (6; 9) is connected to the input unit (1) and the output unit (3) and is designed to change image data received from the input unit (1) in a manner dependent on the parameters in the image parameters and to output them to the output unit (3), wherein the processing unit (6; 9) is designed in such a way that it changes the received image data by carrying out computational processes which determine the change in the image data by means of the parameters, wherein the device comprises an input unit (7) - connected to the processing unit - for determining the computational processes of the processing unit, and wherein the processing unit (6) comprises a mask recognition unit (10), which ensures that partial regions to be processed of the image data received from the input unit (1) are selected, and wherein the mask recognition unit (10) is connected to the input unit (1) and, on the basis of predetermined mask recognition methods, selects the image data to be processed from the incoming image data stream and communicates them to a mask processing unit (11), and wherein the mask processing unit (11) receives temporally variable parameters alongside the image data to be processed and calculates new image data depending on the received image data and the received parameters, and wherein the processing unit (6; 9) is designed to change the masks depending on the parameters, such that the masks themselves experience a procedural animation.

2. Device according to Claim 1, **characterized in that** the processing unit (6; 9) is designed to continuously change the image data received from the input unit (1) depending on the parameters in such a way that even an abrupt change in the parameter brings about a gradual change in the image data, and to output them to the output unit (3).

3. Device according to Claim 2, **characterized in that** the processing unit (6; 9) is designed to continuously change the image data received from the input unit (1) by transformation proceeding from predetermined image information.

4. Device according to Claim 1, **characterized in that** the processing unit (6; 9) is designed to change the image data received from the input unit (1) by generating new, artificial image information.

5. Device according to Claim 1, **characterized in that** the processing unit (6; 9) is designed to change the received image data pixel by pixel.

6. Device according to Claim 1, **characterized in that** the parameters represent events taking place outside the device.

7. Device according to any of the preceding claims, **characterized in that** the processing unit (6; 9) is configured in such a way that it changes the received image data in real time.

8. Device according to any of the preceding claims, **characterized in that** the processing unit (6; 9) is configured in such a way that it changes image parameters of the received image data such as colour, brightness, contrast, gradation, sharpness.

9. Device according to any of the preceding claims, **characterized in that** the processing unit (6; 9) is configured in such a way that it changes the sequential speed of image sequences, the speed of image transformations, form profiles, positioning and extent of three-dimensional bodies, textures of image objects, combinations - predetermined by stylizations - of parameters determining the appearance of image objects, a depth representation, or image objects in the form of geometrical effects.

10. Device according to any of the preceding claims, in particular according to Claim 3, **characterized in that** the processing unit (6; 9) is designed to change a received image data by superimposition with previously stored image data within image regions defined by masks.

11. Device according to any of the preceding claims, **characterized in that** the output unit (3) is designed to output the changed image data to the image displays (4) via a network such as the Internet, television picture transmitters or computer networks.

12. Device according to any of the preceding claims, **characterized by** a detector (5) connected to the input of the processing unit (6; 9) and serving for measuring the image-influencing temporally variable parameters.

13. Device according to Claim 12, **characterized in that** the detector (5) is designed such that it cannot be influenced in its state by a viewer of the image data output to the output unit (3).

14. Device according to Claim 12 or 13, **characterized by** a control unit (8), which is connected to the detector (5) and the output unit (3) and is suitable for controlling the detector (5), wherein the control unit (8) receives image data from the output unit (3) and controls the detector (5) depending on the image data received from the output unit (3).

15. Device according to Claim 1, **characterized in that** the input unit (7) is designed to determine the computational processes on the basis of an algorithmic rule system.

16. Device according to Claim 1, **characterized in that** the input unit (7) has a user interface that visualizes the computational processes of the processing unit (6; 9).

17. Device according to Claim 1, **characterized in that** the processing unit (6; 9) is designed to simulate the movement of liquids, gases, particles, physical particles or solid bodies by means of the computation processes.

18. Device according to Claim 17, **characterized in that** the processing unit (6; 9) is designed to simulate the movement of flowing substances by means of the Navier-Stokes equation.

## Revendications

1. Dispositif destiné à la manipulation procédurale en temps réel de flux de données d'images comprenant une unité d'entrée (1) destinée à recevoir des flux de données d'images et connectée à une source de données d'images (2), et une unité de sortie (3) destinée à délivrer des données d'images, qui est au moins connectée indirectement à l'unité d'entrée (1) et est conçue de manière à délivrer des données d'images à au moins un dispositif d'affichage d'images (4), comprenant une unité de traitement (6 ; 9) comportant une entrée pour la réception d'au moins un paramètre externe variant dans le temps dérivé de grandeurs environnementales provenant de l'extérieur du dispositif comme par exemple la température ambiante, dans lequel l'unité de traitement (6 ; 9) est connectée à l'unité d'entrée (1) et à l'unité de sortie (3) et est conçue de manière à modifier des données d'images reçues de l'unité d'entrée (1) en fonction des paramètres issus des paramètres d'images et à les délivrer à l'unité de sortie (3), dans lequel l'unité de traitement (6 ; 9) est conçue de manière à modifier les données d'images reçues en effectuant des processus de calcul qui déterminent la modification des données d'images à partir des paramètres, dans lequel le dispositif comprend une unité de saisie (7) connectée à l'unité de traitement pour la détermination des processus de calcul de l'unité de traitement, dans lequel l'unité de traitement (6) comprend une unité de détection de masque (10) qui fait en sorte que des sections à traiter des données d'images reçues de l'unité d'entrée (1) soient sélectionnées, dans lequel l'unité de détection de masque (10) est connectée à l'unité d'entrée (1) et sélectionne les données à traiter à partir du flux de données d'entrée à l'aide de procédés de détection de masque prédéterminés et les transmet à une unité de traitement de masque (11), dans lequel l'unité de traitement de masque (11) obtient en outre des paramètres variant dans le temps en plus des données d'images à traiter et calcule de nouvelles données d'images en fonction des données d'images reçues et des paramètres reçus, et dans lequel l'unité de traitement (6; 9) est conçue de manière à modifier les masques en fonction des paramètres afin que les masques soient eux-mêmes soumis à une animation procédurale.

2. Dispositif selon la revendication 1, **caractérisé en ce que** l'unité de traitement (6; 9) est conçue pour modifier également en continu les données d'images reçues de l'unité d'entrée (1) en fonction des paramètres de telle manière qu'une modification brusque du paramètre produise une modification progressive des données d'images, et pour délivrer ces dernières à l'unité de sortie (3).

3. Dispositif selon la revendication 2, **caractérisé en ce que** l'unité de traitement (6, 9) est conçue pour modifier les données d'images reçues de l'unité d'entrée (1) par une transformation continue d'informations d'images prédéterminées.

4. Dispositif selon la revendication 1, **caractérisé en ce que** l'unité de traitement (6; 9) est conçue de manière à modifier les données d'images reçues de l'unité d'entrée (1) en générant de nouvelles informations d'images artificielles.

5. Dispositif selon la revendication 1, **caractérisé en ce que** l'unité de traitement (6; 9) est conçue pour modifier les données d'images reçues pixel par pixel.

6. Dispositif selon la revendication 1, **caractérisé en ce que** les paramètres représentent des événements se produisant à l'extérieur du dispositif.

7. Dispositif selon l'une des revendications précédentes, **caractérisé en ce que** l'unité de traitement (6; 9) est conçue de manière à modifier en temps réel les données d'images reçues.

8. Dispositif selon l'une des revendications précédentes, **caractérisé en ce que** l'unité de traitement (6; 9) est conçue de manière à modifier des paramètres d'images des données d'images reçues tels que la couleur, la luminosité, le contraste, la gradation et la netteté.

9. Dispositif selon l'une des revendications précédentes, **caractérisé en ce que** l'unité de traitement (6; 9) est conçue de manière à modifier la vitesse de reproduction de séquences d'images, la vitesse de transformations d'images, des transformations de formes, le positionnement et la dilatation de corps tridimensionnels, des textures d'objets d'images, de combinaisons prédéfinies par des stylisations de paramètres déterminés par l'apparition d'objets d'images, une représentation de profondeur ou des objets d'images sous la forme d'effets géométriques.

10. Dispositif selon l'une des revendications précédentes, notamment selon la revendication 3, **caractérisé en ce que** l'unité de traitement (6; 9) est conçue de manière à modifier les données d'images reçues par superposition à des données d'images préalablement mémorisées à l'intérieur de domaines d'images définis par des masques.

11. Dispositif selon l'une des revendications précédentes, **caractérisé en ce que** l'unité de sortie (3) est conçue pour délivrer aux dispositifs d'affichage (4) les données d'images modifiées par l'intermédiaire d'un réseau tel que l'Internet, d'un émetteur d'images télévisées ou d'un réseau informatique.

12. Dispositif selon l'une des revendications précédentes, **caractérisé par** un détecteur (5) connecté à l'entrée de l'unité de traitement (6 ; 9) pour mesurer les paramètres variant dans le temps et affectant les images.

13. Dispositif selon la revendication 12, **caractérisé en ce que** le détecteur (5) est configuré, dans son état ne pouvant pas être influencé par un observateur des données d'images délivrées à l'unité de sortie (3).

14. Dispositif selon la revendication 12 ou 13, **caractérisé par** une unité de commande (8) qui est connectée au détecteur (5) et à l'unité de sortie (3) et qui est apte à commander le détecteur (5), dans lequel l'unité de commande (8) reçoit des données d'images de l'unité de sortie (3) et commande le détecteur (5) en fonction des données d'images reçues de l'unité de sortie (3).

15. Dispositif selon la revendication 1, **caractérisé en ce que** l'unité de saisie (7) est configurée pour déterminer les processus de calcul à l'aide d'un ensemble de règles algorithmiques.

16. Dispositif selon la revendication 1, **caractérisé en ce que** l'unité de saisie (7) comprend une interface utilisateur visualisant les processus de calcul de l'unité de traitement (6 ; 9).

17. Dispositif selon la revendication 1, **caractérisé en ce que** l'unité de traitement (6 ; 9) est conçue pour simuler par les processus de calcul le mouvement de liquides, de gaz, de particules, de fragments ou de corps solides.

18. Dispositif selon la revendication 17, **caractérisé en ce que** l'unité de traitement (6 ; 9) est conçue pour simuler le mouvement de matières fluides au moyen des équations de Navier-Stokes.
